**Europäisches Patentamt**

**European Patent Office**

**Office européen des brevets**

(19)

(11) Publication number: **0 248 807 B1**

(12) # EUROPEAN PATENT SPECIFICATION

(45) Date of publication of patent specification :
08.05.91 Bulletin 91/19

(51) Int. Cl.⁵ : **A01B 59/00, A01B 59/043,**
**A01B 63/11, A01B 63/114**

(21) Application number : 86901568.5

(22) Date of filing : 20.02.86

(86) International application number :
**PCT/SE86/00075**

(87) International publication number :
**WO 86/04769 28.08.86 Gazette 86/19**

(54) ARRANGEMENT FOR AN IMPLEMENT INTENDED FOR SOIL CULTIVATION.

(30) Priority : 25.02.85 SE 8500903

(43) Date of publication of application :
16.12.87 Bulletin 87/51

(45) Publication of the grant of the patent :
08.05.91 Bulletin 91/19

(84) Designated Contracting States :
AT BE CH DE FR GB IT LI LU NL SE

(56) References cited :
DE-A- 2 049 326
DE-A- 3 017 570
See also references of WO8604769

(73) Proprietor : RANFLO FÖRSÄLJNINGS AB
Larv
S-530 10 Vedum (SE)

(72) Inventor : OLSSON, Bengt
Tjugesta
S-641 00 Katrineholm (SE)

(74) Representative : Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
W-8000 München 2 (DE)

EP 0 248 807 B1

## Description

The present invention relates to a machine having an implement intended for soil cultivation and having a frame carrying soil cultivating devices, which frame is so arranged as to be connected at its forward end considered in the direction of working to a towing vehicle or similar via a hitch, said implement being capable of pivoting about an articulation.

DE-A-3 017 570 discloses an arrangement for controlling the depth of penetration of a plough drawn by a tractor using as standard size the load of a Diesel engine.

DE-A-2 049 326 describes a supporting frame for a soil cultivation aggregate consisting of a drill machine and, attached to the frame, different cultivation devices.

The principal object of the present invention is first of all to produce a machine with an implement of the kind indicated above which is of simple construction and which makes it possible, without the use of a complicated, separate and cost-increasing supporting frame for the soil cultivation implement in question, such as a harrow for seed bed preparation, to provide the implement with a good capability to maintain the desired working depth and to be capable of working essentially parallel with the surface of the ground, and yet to be capable of operating when supported on a number of wheel brackets and wheels or other supporting devices attached to the implement.

The aforementioned object is achieved by means of a machine of the kind indicated above, which is characterized essentially in that the hitch comprises a hydraulic secondary cylinder, the forward end of which is anchored to the forward end of the hitch, said forward end being attachable to a vehicle, a point near the rear end of the hitch being pivotally anchored to the frame of the implement by means of the said articulation, the said articulation being situated at a level higher than the ground where the soil cultivating devices forming part of the implement are introduced down into the ground, and in that the implement is attached behind the articulation to the rear end of the said hydraulic secondary cylinder by a device at the rear end of the hitch in such a way that tractive force is transferred to the implement in order to cause turning moment about the aforementioned articulation, for the purpose to counteract the moment, which arises as a result of the interaction of the implement with the ground and to counteract the rocking of the implement.

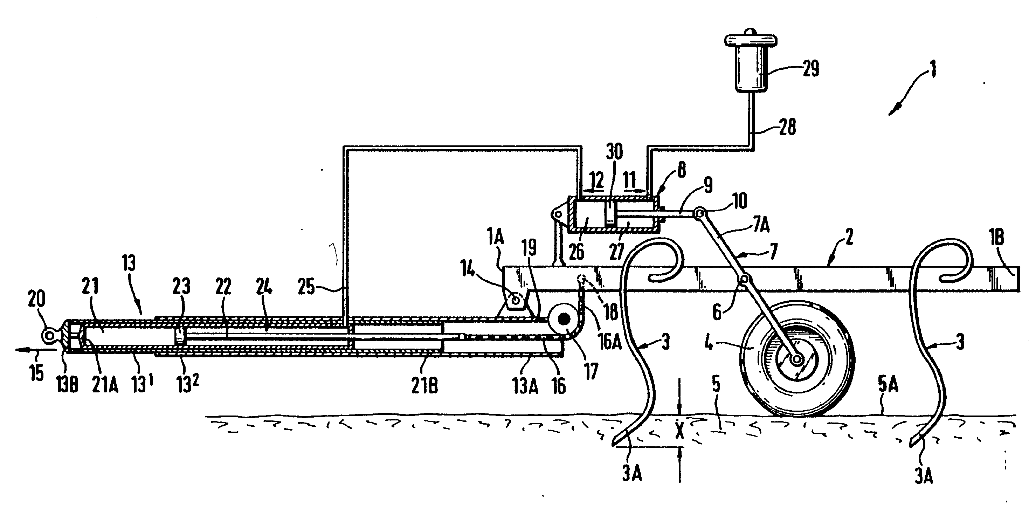

The invention is described below as a preferred illustrative embodiment, for which purpose reference is made to the accompanying drawing, which shows a diagrammatic side view of a machine according to the invention applied to a soil cultivation implement executed as a harrow.

A soil cultivation implement 1, such as a harrow intended for seed bed preparation, comprises an implement frame 2, to which a number of harrow tines 3 or other soil cultivation devices are attached, and which is intended to be capable of being connected in a detachable fashion to a tractor or some other towing vehicle or similar. A number of wheels 4 or other suitable supporting devices which function as supports for the implement 1 and which are so arranged as to be capable of interacting with the surface of the ground 5A, are preferably so arranged as to be supported by a number of levers 7 connected to said frame 2 via a number of articulations 6. A moving jack 8, which preferably consists of a hydraulic cylinder, may be connected by its piston 9, for example, to the lever 7 in question via an articulated joint 10 at the end 7A of the lever facing away from the supporting wheel 4. The working depth X of the harrow tines in the ground 5 can be adjusted by this means by actuating the jack which functions as a so-called primary cylinder 8, whereby the height of said wheel 4 in relation to the frame 2 is varied depending on the direction 11 or 12 in which the piston 9 is caused to move. In the example illustrated, actuation in the direction 11 will cause the depth X to reduce, whilst actuation in the direction 11 will increase the depth X.

The implement 1 is so arranged, by means of a hitch 13 situated at the front end 1A of the implement which is connected to an articulation 14 situated at the front end 1A of the implement and at the rear end 13A of the hitch, and which is also situated at a level higher than the ground where the soil cultivating devices 3 forming part of the implement 1 are introduced down into the ground 5, as to be capable of being connected in a detachable fashion to a towing vehicle, etc., whereby the implement 1 and the hitch 13 are able to pivot relative to one another about said articulation 14, Towing the implement 1 in the direction of the arrow 15 will, in the case of previously disclosed implements, result in the rear edge of the implement rocking up and down because of the variation in the resistance between the harrow tines and the ground when working with the implement. This interferes with the desired movement of the harrow parallel with the ground. In order to solve the aforementioned problem when the implement 1 is supported on wheels 4, etc., it is proposed to counteract the aforementioned interfering and variable moments produced by the interaction of the implement with the ground 5 by connecting the implement 1 to the aforementioned hitch 13 behind the articulation 14 in question, when viewed in the direction of working 15 of the implement.

A chain 16 or some other preferably flexible towing device is so arranged for this purpose as to connect the aforementioned hitch 13 to the implement frame 2 and is preferably turned around a deflector pulley arranged as a guide wheel 17 or similar. One section 16A of the chain is attached preferably in a detachable fashion to the frame 2 via an attachment 18 situated between the position of the articulation 14 or 6 or at some other suitable point, such that the towing device 16 can act on the frame 2, and such that the guide wheel, etc., 17 is supported by an attachment 19 hich is situated at the aforementioned rear end 13A of the hitch 13. The position of said attachment 18, 19 is preferably so arranged as to be capable of adjustment in the horizontal plane, preferably by means of a series of holes.

The hitch 13 can be formed by a telescopic arrangement consisting of a number of tubes $13^1$, $13^2$ capable of displacement relative to one another, which, at its front end 13B viewed in the direction of working 15 of the implement, is capable of being connected to a vehicle, etc., preferably via a coupling component 20. An appropriate hydraulic so-called secondary cylinder 21 is accomodated preferably internally in the aforementioned hitch 13, said cylinder being anchored by its forward end 21A to the frontmost tube $13^1$ of the aformentioned telescopic tubes $13^1$, $13^2$, viewed in the direction of working 15, for the purpose of anchoring it to the aforementioned coupling component 20. The other, rear end 21B of the cylinder 21, preferably being the piston rod 22 of the cylinder, which is connected to a moving piston 23 accommodated inside the cylinder 21, is anchored via the aforementioned towing device 16 to the frame 2 of the implement after having been turned around the guide wheel 17, etc. The rearmost piston accommodating space 24 in the secondary cylinder 21, viewed in the direction of working 15, is connected via a line 25 or some other hose-like connection to a first piston space 26 in the primary cylinder 8.

A second piston space 27 in the aforementioned primary cylinder 8 is capable of being connected via a line 28 preferably to a pneumatic/hydraulic accumulator 29 which is so arranged as to operate at an appropriate precompression, the job of which is to ensure that the arrangement described above is connected at the desired working depth of the devices 3 or at the appropriate tractive force.

If, for example, the harrow 1 shows a tendency to penetrate too deeply at its front end 1A as a result of increased ground resistance acting on the harrow tines, etc., 3, this will increase its pulling requirement. This will cause the cylinder 21 to be drawn apart so that fluid contained in the space 24 is forced to flow via the line 25 into one of the spaces 26 in the cylinder 8, A piston 30 in the cylinder 8 will then be caused by the lever 7 to force the wheel 4 towards the ground 5A, in so doing slightly raising the frame 2 together with its harrow tines, etc., 3. The accumulator 29 will then ensure that the desired effect takes place at an appropriate depth X and at an appropriate tractive force, in so doing acting like a spring which counteracts the excessively early forcing down of the wheel 4 in question.

The turning moment uhich is produced and which acts with the articulation 14 as the pivot point because the hitch 13 is attached to the implement 1 at the articulation 14, said articulation 14 being situated significantly above the level at which the counterforce to the tractive force in the form of the resistance of the ground to the underground part 3A of the harrow tines, for example, produces its effect, and which, attempts to interfere with the movement of the harrow parallel with the ground and to cause it to lift at its rear edge 1B, is counteracted in accordance with the invention by the turning moment which arises as a consequence of the fact that the force in the vertical part 16A of the chain, etc., 16 is applied -when viewed in the direction of working 15 of the implement essentially behind the articulation 14. If the position of the attachment 18 is selected correctly, then the two turning moments will compensate for one another, resulting in the implement 1 maintaining a parallel attitude, this being the desired result, amongst other things.

## Claims

1. A machine having an implement (1) intended for soil cultivation and having a frame carrying soil cultivating devices, which frame is so arranged as to be connected at its forward end considered in the direction of working to a towing vehicle or similar via a hitch (13), said implement (1) being capable of pivoting about an articulation (14), characterized in that the hitch (13) comprises a hydraulic secondary cylinder (21), the forward end of which is anchored to the forward end of the hitch (13), said forward end (21A ; 13B) being attachable to a vehicle, a point near the rear end (21B ; 13A) of the hitch being pivotally anchored to the frame (2) of the implement (1) by means of the said articulation (14), the said articulation being situated at a level higher than the ground (5) where the soil cultivating devices (3) forming part of the implement are introduced down into the ground (5), and in that the implement is attached behind the articulation (14) to the rear end of the said hydraulic secondary cylinder (21) by a device (16) at the rear end of the hitch (13) in such a way that tractive force is transferred to the implement (1), in order to cause turning moment about the aforementioned articulation (14), for the purpose to counteract the moment, which arises as a result of the interaction of the implement (1) with the ground (5) and to counteract the rocking of the implement (1).

2. A machine according to claim 1, characterized in that the implement (1) is so arranged as to be supported by a number of wheels (4) or other supporting devices which are capable of interacting with the ground surface (5A).

3. A machine according to claim 1 or 2, characterized in that a supporting wheel (4), etc., is connected to a lever (7) attached to the frame (2) of the implement, said lever being so arranged as to operate in conjunction with a moving jack (8).

4. A machine according to claim 3, characterized in that the jack (8) consists of a hydraulic primary cylinder (8) with its piston (30) connected to the lever (7), which is pivotally mounted about an articulation (6) situated on the frame (2) of the implement.

5. A machine according to one of the claims 1 to 4, characterized in that the device for attaching the hydraulic secondary cylinder (21) to the frame (2) of the implement (1) comprises a chain (16) or some other flexible towing device which is capable of being turned around a deflector pulley (17).

6. A machine according to claim 5, characterized in that the deflector pully (17) is preferably in the form of a guide wheel (17), the position of which, preferably in a similar fashion to the point of attachment (18) of the towing device to the frame, is so arranged as to be capable of adjustment in the horizontal plane, preferably by means of a series of holes.

7. A machine according to one of the claims 4 to 6, charaterized in that the primary cylinder (8) is capable of being connected to the secondary cylinder (21).

8. A machine according to claim 7, characterized in that a pneumatic/hydraulic accumulator (29) is connected to the primary cylinder (8).

9. A machine according to one of the claims 1 to 8, characterized in that the hitch (13) is formed by a telescopic arrangement consisting of a number of tubes ($13^1$, $13^2$) capable of displacement relative to one another.

## Ansprüche

1. Maschine mit einem zur Bodenkultivierung bestimmten Gerät (1) und mit einem Boden-Kultiviervorrichtungen tragenden Rahmen, welcher so eingerichtet ist, daß er an seinem vorderen Ende bei Betrachtung in der Arbeitsrichtung mit einem Zugfahrzeug oder dergleichen über eine Kupplungsdeichsel (13) zu verbinden ist, wobei das Gerät (1) imstande ist, um eine Gelenkverbindung (14) zu schwenken, dadurch gekennzeichnet, daß die Kupplungsdeichsel (13) einen hydraulischen Sekundärzylinder (21) umfaßt, dessen vorderes Ende am vorderen Ende der Kupplungsdeichsel (13) verankert ist, wobei das besagte vordere Ende (21A ; 13B) an einem Fahrzeug befestigbar ist, daß eine dem rückwärtigen Ende (21B ; 13A) der Kupplungsdeichsel nahegelegene Stelle gelenkig am Rahmen (2) des Geräts (1) mittels der erwähnten Gelenkverbindung (14) befestigt ist, wobei diese Gelenkverbindung sich auf einem höheren Niveau als der Boden (5) befindet, wo die einen Teil des Geräts bildenden Boden-Kultiviervorrichtungen (3) abwärts in den Boden (5) eingeführt sind, und daß das Gerät hinter der Gelenkverbindung (14) an dem rückwärtigen Ende des genannten hydraulischen Sekundärzylinders (21) durch eine Einrichtung (16) am rückwärtigen Ende der Kupplungsdeichsel (13) derart angebracht ist, daß eine Zugkraft auf das Gerät (1) übertragen wird, um ein Drehmoment um die vorerwähnte Gelenkverbindung (14) zu dem Zweck hervorzurufen, dem Moment, das als ein Ergebnis der Wechselwirkung des Geräts (1) mit dem Boden (5) entsteht, entgegenzuwirken und das Schwingen des Geräts (1) zu vereiteln.

2. Maschine nach Anspruch 1, dadurch gekennzeichnet, daß das Gerät (1) so eingerichtet ist, von einer Anzahl von Rädern (4) oder anderen Stützeinrichtungen, die imstande sind, mit der Bodenoberfläche (5A) in Wechselwirkung zu treten, getragen zu werden.

3. Maschine nach Anspruch 1 oder 2, dadurch gekennzeichnet, daß ein tragendes Rad (4) usw. mit einem am Rahmen (2) des Geräts angebrachten Hebel (7) verbunden ist, wobei dieser Hebel so angeordnet ist, um zusammen mit einem sich bewegenden Stellantrieb (8) zu arbeiten.

4. Maschine nach Anspruch 3, dadurch gekennzeichnet, daß der Stellantrieb (8) aus einem hydraulischen Primärzylinder (8) besteht, dessen Kolben (30) mit dem Hebel (7) verbunden ist, welcher um eine Schwenkverbindung (6) herum, die am Rahmen (2) des Geräts angebracht ist, drehbar befestigt ist.

5. Maschine nach einem der Ansprüche 1 bis 4, dadurch gekennzeichnet, daß die Einrichtung zum Anbringen des hydraulischen Sekundärzylinders (21) am Rahmen (2) des Geräts (1) eine Kette (16) oder irgendeine andere flexible Zugeinrichtung, welche imstande ist, um eine Umlenkrolle (17) herum geführt zu werden, umfaßt.

6. Maschine nach Anspruch 5, dadurch gekennzeichnet, daß die Umlenkrolle (17) vorzugsweise die Gestalt eines Führungsrades (17) hat, dessen Position vorzugsweise in einer zur Befestigungsstelle (18) der Zugeinrichtung am Rahmen gleichartigen Weise so angeordnet ist, daß sie zu einer Justierung in der horizontalen Ebene, vorzugsweise mittels einer Reihe von Löchern, fähig ist.

7. Maschine nach einem der Ansprüche 4 bis 6, dadurch gekennzeichnet, daß der Primärzylinder (8) zu einer Verbindung mit dem Sekundärzylinder (21) imstande ist.

8. Maschine nach Anspruch 7, dadurch gekennzeichnet, daß mit dem Primärzylinder (8) ein pneumatischer/hydraulischer Speicher (29) verbunden ist.

9. Maschine nach einem der Ansprüche 1 bis 8, dadurch gekennzeichnet, daß die Kupplungsdeichsel (13) aus einer teleskopischen Anordnung gebildet ist, die aus einer Anzahl von zu einer Relativverschiebung mit Bezug zueinander fähigen Rohren ($13^1$, $13^2$) besteht.

## Revendications

1. Machine possédant un accessoire (1) prévue pour la culture du sol et possédant un châssis portant les dispositifs de travail du sol, ce châssis étant disposé de façon à être attelé à son extrémité avant, vu dans le sens du travail, à un véhicule tracteur ou analogue par l'intermédiaire d'un timon (13), cet accessoire pouvant pivoter par rapport à une articulation (14), caractérisée en ce que le timon (13) comprend un vérin hydraulique secondaire (21) dont l'extrémité avant est accrochée à l'extrémité du timon (13), ladite extrémité avant (21A ; 13B) pouvant être rattachée à un véhicule, un point voisin de l'extrémité arrière (21A ; 13B) du timon (13) est fixé au châssis (2) de l'accessoire (1) de façon à pouvoir pivoter grâce à ladite articulation (14), ladite articulation étant placée à un niveau plus haut que le sol (5), les dispositifs de culture du sol formant une partie de l'accessoire étant introduits vers le bas dans le sol (5), et en ce que l'accessoire est relié derrière cette articulation (14) à l'extrémité arrière (16) de ce second vérin hydraulique (21) par un système (16) à l'extrémité arrière du timon (13) de façon telle que l'effort de traction soit transmis à l'accessoire (1) en vue de provoquer un couple de rotation par rapport à l'articulation (14) mentionnée ci-dessus, dans le but de s'opposer au couple résultant de l'interaction de l'accessoire (1) avec le sol (5) et de contrebalancer les oscillations de l'accessoire (1).

2. Machine selon la revendication 1, caractérisée en ce que l'accessoire (1) est conçu pour être supporté par un certain nombre de roues (4) ou d'autres dispositifs qui sont capables d'interaction avec la surface du sol (5A).

3. Machine selon la revendication 1 ou 2, caractérisée en ce qu'une roue porteuse (4) etc., est reliée à un levier (7) fixé au châssis (2) de l'accessoire, ce levier étant disposé pour agir en conjonction avec un vérin mobile (8).

4. Machine selon la revendication 3, caractérisée en ce que le vérin (8) se compose d'un vérin primaire hydraulique (8) dont le piston (30) est relié au levier (7) qui est monté de façon à pouvoir pivoter autour d'une articulation (6) située sur le châssis (2) de l'accessoire (1),

5. Machine selon l'une des revendications 1 à 4, caractérisée en ce que le dispositif de fixation du second vérin hydraulique (21) au châssis (2) de l'accessoire (1) comporte une chaîne (16) ou tout autre système flexible de remorquage qui soit capable de tourner autour d'une poulie de renvoi (17).

6. Machine selon l'une des revendications 1 à 5, caractérisée en ce que la poulie de renvoi (17) est de préférence sous la forme d'une roue de guidage (17) dont la position, de préférence d'une façon similaire au point d'attache (18) du dispositif de remorquage sur le châssis, est placée de façon à pouvoir être réglée dans le plan horizontal, de préférence au moyen d'une série de trous.

7. Machine selon l'une de revendications 4 à 6, caractérisée en ce que le vérin primaire (8) peut être raccordé au vérin secondaire (21).

8. Machine selon la revendication 7, caractérisée en ce qu'un accumulateur pneumatique/hydraulique (29) est relié au vérin primaire (8).

9. Machine selon l'une des revendications 1 à 8, caractérisée en ce que le timon (13) est formé par un dispositif télescopique se composant d'un certain nombre de tubes (13$^1$, 13$^2$) pouvant se déplacer relativement les uns par rapport aux autres.